# EUROPÄISCHE PATENTANMELDUNG

(11) **EP 0 863 654 A2**
(43) Veröffentlichungstag der Anmeldung: **09.09.1998**
(21) Anmeldenummer: 98103852.4
(22) Anmeldetag: 05.03.1998
(51) Int. Cl.: H04M 19/08

(54) **Telekommunikations-Endgerät**

(30) Priorität: 06.03.1997 DE 19709108
(71) Anmelder: FMN-Fernmeldetechnik GmbH Nordhausen, 99734 Nordhausen (DE)
(72) Erfinder: Schade, Rudolf, Dr.-Ing., 99734 Nordhausen (DE); Mieth, Klaus-Jürgen, Dipl.-Ing. (FH), 99734 Nordhausen (DE)
(74) Vertreter: Lins, Edgar, Dipl.-Phys. Dr.jur.

(57) **Zusammenfassung**

Bei einem Telekommunikations-Endgerät mit einem Eingang für eine Eingangsspannung aus einem Netzgerät oder einer Telefonleitung, über die eine Notspeisung beim Ausfall des Netzgeräts erfolgt, mit einem Detektor (PD) für den Zustand der Versorgung über das Netzgerät oder über die Notspeisung, mit einem Prozessor (µC), dem das Detektionssignal des Detektors (PD) und über die Telefonleitung übertragene Kommunikationssignale einschließlich von Statussignalen zuführbar sind, und mit einem primär getakteten Schaltregler als Gleichspannungswandler (10) zur Wandlung der Eingangsspannung (VCC) in eine Versorgungsspannung (VOUT), der einen Oszillator (12) mit einem frequenzbeeinflussenden äußeren passiven Bauelement (R₁) enthält, wird vorgesehen, daß das frequenzbeeinflussende Bauelement (R1) durch zumindest ein weiteres passives Bauelement (Z₁ ... Zₙ) zu einem Netzwerk erweitert ist, das durch den Prozessor (µC) in Abhängigkeit von vom Prozessor (µC) erkannten Betriebszuständen des Endgeräts schaltbar ist. Durch die so bewirkte Umschaltung der Frequenz des Oszillators (12) wird in Abhängigkeit von den Betriebszuständen des Telekommunikations-Endgeräts eine Optimierung der Arbeitsweise des Gleichspannungswandlers (10) erreicht.

## Beschreibung

Die Erfindung betrifft ein Telekommunikations-Endgerät mit einem Eingang für eine Eingangsspannung aus einem Netzgerät oder einer Telefonleitung, über die eine Notspeisung beim Ausfall des Netzgeräts erfolgt, mit einem Detektor für den Zustand der Versorgung über das Netzgerät oder über die Notspeisung, mit einem Prozessor, dem das Detektionssignal des Detektors und über die Telefonleitung übertragene Kommunikationssignale einschließlich von Statussignalen zuführbar sind, und mit einem primär getakteten Schaltregler als Gleichspannungswandler zur Wandlung der Eingangsspannung in eine Versorgungsspannung, der einen Oszillator mit einem frequenzbeeinflussenden äußeren passiven Bauelement enthält.

Bekannte Telekommunikations-Endgeräte, insbesondere Telefonapparate, dieser Art werden insbesondere in digitalen Telekommunikationsnetzen, insbesondere im ISDN, benutzt. Die Stromversorgung der Telekommunikations-Endgeräte erfolgt üblicherweise über ein Netzgerät, das die Eingangsspannung für das Telekommunikations-Endgerät zur Verfügung stellt. Diese Eingangsspannung beträgt zwischen 24 V und 42 V. Ein herkömmlicher ISDN-Telefonapparat, der an einem solchen Netzabschluß betrieben wird, darf nach den Spezifikationen der Deutschen Telekom eine Maximallast von 1 W ziehen. Dieser Leistungsanfall tritt beispielsweise dann auf, wenn die akkustische Signalvorrichtung des Telefonapparates, der sogenannte Tonruf, eingeschaltet wird, um dem Benutzer zu signalisieren, daß ein eingehender Anruf anliegt.

Fällt die Netzspannung aus, so ist spezifikationsgemäß vorgesehen, daß die Telefonapparate ihre Versorgungsspannung über eine Phantomspeisung direkt von der Ortsvermittlungsstelle (OVST) erhalten, wobei bei einer solchen Notspeisung die Leistung im deaktivierten Zustand auf 25 mW begrenzt ist. Beim Betriebsfall Notspeisung ist im Aktivzustand die maximal zur Verfügung gestellte Leistung z.B. für einen eingehenden Tonruf auf 380 mW begrenzt.

Die Umschaltung des Endgeräts von der normalen Spannungsversorgung über das Netzteil zur Notspeisung erfolgt durch ein Detektionssignal eines Detektors, der den Ausfall des Netzgeräts und die Einschaltung der Notspeisung erkennt. Dieser Detektor ist üblicherweise ein Polaritätsdetektor, da die Notspeisung mit einer gegenüber dem Netzgerät umgekehrten Polarität erfolgt.

Bei der Umschaltung auf die Notspeisung müssen maximale Lastschwankungen im Verhältnis 1:40 von dem Gleichspannungswandler verarbeitet werden.

Der in einem primärgetakteten Schaltregler als Gleichspannungswandler verwendete Hochfrequenz-Transformator erreicht bei einem bestimmten Betriebspunkt seine Sättigung, wobei dieser Punkt sowohl strom- wie frequenzabhängig ist. Daraus ergibt sich, daß auch der zugehörige Wirkungsgrad leistungs- und frequenzabhängig ist. Ein auf einen bestimmten Betriebspunkt ausgelegter Gleichspannungswandler, beispielsweise auf 1 W Leistung bei eingehendem Tonruf und anliegender Versorgungsspannung von 24 V, ist naturgemäß nicht wirkungsgradoptimiert für den Fall der Notspeisung, bei dem lediglich 25 mW, d.h. eine um den Faktor 40 geringere Leistung, zur Verfügung gestellt wird.

Die üblicherweise verwendeten Ansteuerschaltungen für primärgetaktete Schaltregler als Gleichspannungswandler weisen einen Oszillator mit einem äußeren frequenzbestimmenden Bauelement auf. Dieses frequenzbestimmende Bauelement ist üblicherweise ein Widerstand, der vom Anwender frei gewählt wird und mit zwei Kontaktstiften der integrierten Schaltung verbunden wird. Ein Beispiel für eine solche Schaltung ist der Baustein Si9105 der Firma Siliconix.

Im Rahmen der Datenkommunikation in dem Telekommunikationsnetz wird auch ein Statussignal erzeugt, das angibt, ob ein bestimmtes Telekommunikations-Endgerät, vorzugsweise ein Telefonapparat, sich gerade im aktiven oder inaktiven Zustand befindet. Der aktive Zustand ergibt sich dadurch, daß bei einem Telefonapparat der Hörer abgenommen ist und der Verbindungsaufbau erfolgt bzw. die Verbindung hergestellt ist. Der inaktive Zustand setzt eine abgebaute Verbindung und den aufgelegten Hörer voraus. Diese Zustandsangaben sind insbesondere für die OVST wichtig, um zu erkennen, daß der bestimmte Telefonapparat "besetzt" ist, also ein externer Anruf nicht zu einem erfolgreichen Verbindungsaufbau führen kann.

Der Erfindung liegt die Aufgabe zugrunde, ein Telekommunikations-Endgerät der eingangs erwähnten Art so zu verbessern, daß über den Gleichspannungswandler eine optimierte Versorgungsspannung zur Verfügung gestellt werden kann.

Zur Lösung dieser Aufgabe ist das Telekommunikations-Endgerät der eingangs erwähnten Art erfindungsgemäß dadurch gekennzeichnet, daß das frequenzbeeinflussende Bauelement durch zumindest ein weiteres passives Bauelement zu einem Netzwerk erweitert ist, das durch den Prozessor in Abhängigkeit von vom Prozessor erkannten Betriebszuständen des Endgeräts schaltbar ist.

Mit der erfindungsgemäßen Beschaltung, die sich leicht einem herkömmlichen integrierten Baustein, beispielsweise dem Si9105, hinzufügen läßt, kann das erste frequenzbestimmende äußere passive Bauelement beispielsweise ein Widerstand sein, der die Oszillatorfrequenz so einstellt, daß die Schaltfrequenz des primärgetakteten Schaltreglers auf den minimalen Lastfall angepaßt wird. Durch Hinzuschalten des zumindest einen weiteren passiven Bauelement kann die Schaltfrequenz entsprechend dem Maximallastfall - beispielsweise 1 W - optimiert werden. Dabei wird die Ladebedingung eines den Umsteuerpunkt des Oszillators bestimmenden Ladekondensators so verändert, daß bei niedrigem Lastanfall eine höhere Schaltfrequenz zur Darstellung eines hohen Wirkungsgrades generiert wird.

Bevorzugt werden mehrere zusätzliche Bauelemente, die jeweils schaltbar sind, vorgesehen, so daß verschiedene Schaltfrequenzeinstellungen in Abhängigkeit von Zwischenzuständen des Lastzustandes einstellbar sind.

Das so geschaffene geschaltete externe Netzwerk beeinflußt dabei nachhaltig die Ladezeit eines Ladekondensators in einem schaltkreisinternen RC-Glied und somit die Schaltfrequenz des Oszillators, der damit bestimmungsgemäß in die jeweils optimale Schaltfrequenzlage gebracht wird.

Die Umschaltung der Oszillatorfrequenz erfolgt bei dem erfindungsgemäßen Telekommunikations-Endgerät durch die Erkennung von bestimmten Betriebszuständen des Endgeräts durch den Prozessor, wobei die Betriebszustände vom Prozessor vorzugsweise aus einer Auswertung der im Telekommunikationsnetz übertragenen Statussignale und des Detektionssignals des Detektors erfolgt. Die Umschaltung der Oszillatorfrequenz erfolgt somit zweckmäßigerweise nicht, wie dies für getaktete Gleichspannungswandler an sich bekannt ist, lediglich in Abhängigkeit von der jeweiligen Last sondern erfindungsgemäß in Abhängigkeit von bestimmten Betriebszuständen, die sich aus den dem Prozessor zugeführten Signalen ergeben. Hieraus ergibt sich, daß die Umschaltung unter anderen Kriterien, d.h. auch zu anderen Zeitpunkten, als bei einer Last gesteuerten Umschaltung erfolgt. Für den Einsatz in dem Telekommunikations-Endgerät kann der Schaltregler ein Gegentakt-Wandler sein, im allgemeinen wird die Ausführung als Eintakt-Wandler jedoch vorzuziehen sein.

Die Erfindung soll im folgenden anhand eines in der Zeichnung dargestellten Ausführungsbeispiels näher erläutert werden.
Es zeigen:
- Figur 1: - ein schematisches Schaltbild der Ansteuerung eines Gleichspannungswandlers in einem Telekommunikations-Endgerät
- Figur 2: - ein schematisches Schaltbild für den Anschluß des Prozessors an das Telekommunikations-Netzwerk
- Figur 3a - d: - Funktionsabläufe für die Erkennung von Betriebszuständen im Prozessor.

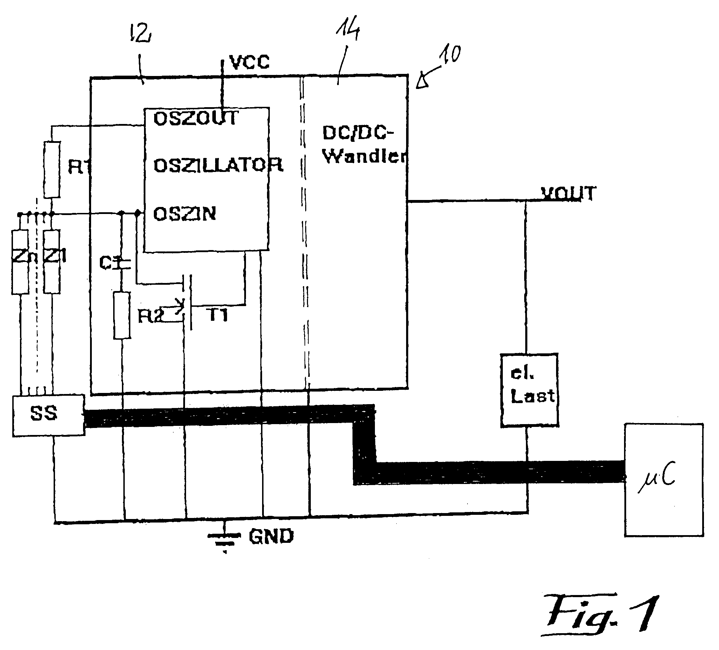

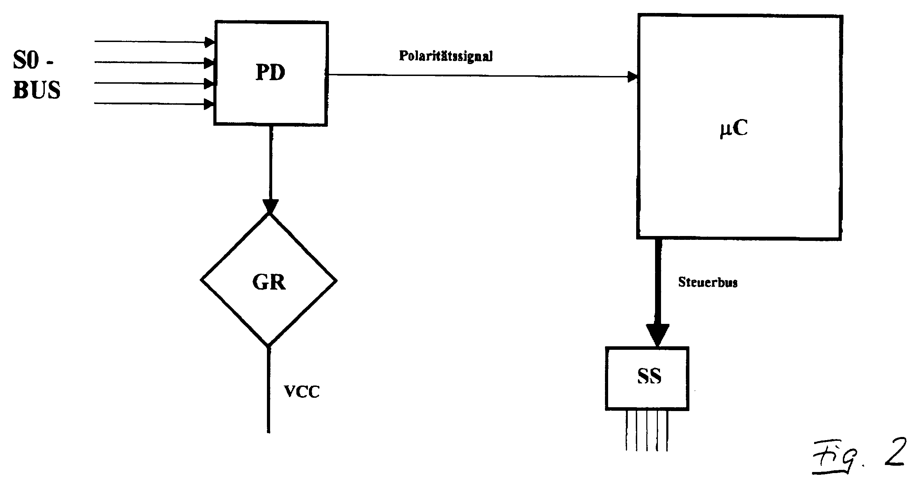

Figur 1 zeigt einen schematisch dargestellten Gleichspannungswandler 10 (DC/DC-Wandler). Dieser weist einen integrierten Baustein 12 auf, der vornehmlich der Erzeugung der Schaltfrequenz dient, sowie weitere an sich bekannte, daher im einzelnen nicht dargestellte Bauelemente 14, wie beispielsweise den notwendigen Hochfrequenz-Transformator und eine sekundärseitige Gleichrichterschaltung.

Der Oszillator 12 weist zwei Anschlüsse OSZₒᵤₜ und OSZᵢₙ auf. Diese sind dazu vorgesehen, durch äußeres Beschalten mittels eines Widerstandes R₁ die Schwingfrequenz des Oszillators und damit die Schaltfrequenz für den Gleichspannungswandler vorzugeben.

Die Eingangsspannung ist als VCC bezeichnet, die vom Gleichspannungswandler gelieferte Ausgangsspannung als Vₒᵤₜ.

Der Widerstand R₁ steuert die Ladebedingung des den Umsteuerpunkt des Oszillators bestimmenden Ladekondensators C₁ des IC-internen Netzwerkes R₂/C₁.

Unter Verwendung eines handelsüblichen integrierten Oszillatorbausteines 12 kann erfindungsgemäß die äußere Beschaltung durch R₁ durch ein zusätzliches Netzwerk Z₁ ... Zₙ erweitert werden. Diese zusätzlichen Impedanzen werden über eine Schaltstufe SS wahlweise auf Masse (GND) gelegt. Die Ansteuerung der Schaltstufe SS erfolgt über einen Prozessor µC, in dem Betriebszustände des Telekommunikations-Endgeräts festgestellt werden.

In Abhängigkeit von den ermittelten Betriebszuständen gibt der Prozessor µC der Schaltstufe SS die notwendigen Impulse, um bedarfsweise die Anteile der Impedanzen Z₁ ... Zₙ so zu schalten, daß eine niedrigere Schaltfrequenz zur Darstellung eines hohen Wirkungsgrades für einen zu erwartenden hohen Lastanfall erzeugt wird bzw. umgekehrt eine höhere Schaltfrequenz zur Optimierung des Wirkungsgrades für zu erwartende niedrigere Lastanfälle, beispielsweise bei der Notspeisung eines ISDN-Telefonapparates.

Sind alle Impendanzen Z₁ ... Zₙ durch die Schaltstufe SS gesperrt, d.h. von Masse getrennt, so ist wiederum der Widerstand R₁ alleine maßgeblich für die Ladebedingungen des Kondensators C₁ des internen Netzwerkes C₁/R₂.

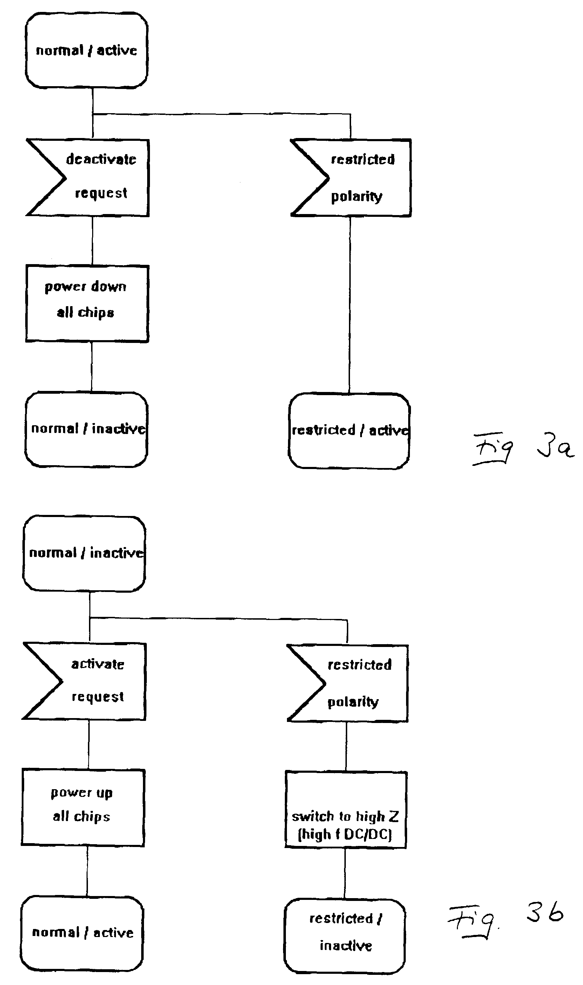

Figur 2 verdeutlicht, daß über einen Bus (S0-Bus) des Netzabschlusses eines ISDN-Netzwerks Eingangsspannungen aus einem (nicht dargestellten) Netzgerät bzw. von einer OVST auf einen Detektor PD gelangen, der die Polarität der anliegenden Eingangsspannung detektiert und ein entsprechendes Detektionssignal (Polaritätssignal) auf den Prozessor µC leitet. Die im Detektor PD detektierte Eingangsspannung gelangt über eine Verpolungsschutzschaltung GR als Eingangsspannung VCC in den Gleichspannungswandler 10 gemäß Figur 1.

Der Prozessor µC erhält ferner an (nicht dargestellten) Eingängen Kommunikationssignale der Telefonleitung, in denen auch ein Statussignal "aktiv"/"inaktiv" enthalten ist. Entsprechend bestimmter festgestellter Betriebszustände steuert der Prozessor µC über einen Steuerbus die Schaltstufe SS in Figur 1, die über die Zuschaltung der Widerstände Z₁ ... Zₙ die Frequenz des Oszillators 12 steuert.

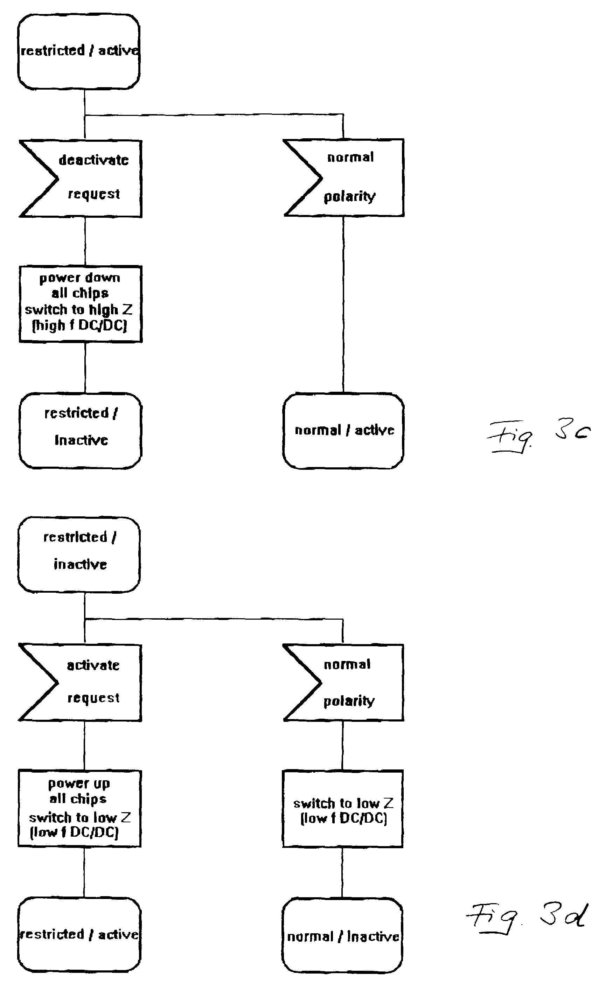

Die Figuren 3a bis 3d zeigen für ein einfaches Ausführungsbeispiel die Erkennung von Betriebszuständen in dem Prozessor µC.

Ausgangspunkt für den in Figur 3a dargestellten Ablauf ist der Zustand "normal/active", also der Zustand, in dem das betreffende Endgerät "aktiv" ist, was der Prozessor µC durch das entsprechende Signal auf der ISDN-Leitung erkennt. "Normal" kennzeichnet, daß die normale Stromversorgung über das Netzgerät erfolgt. Wird in diesem Zustand über die ISDN-Leitung ein "deactivate request" gesandt, werden die Bauelemente (Chips) in dem Endgerät in einen Stand-by-Zustand versetzt und als Betriebszustand nunmehr vom Prozessor µC der Zustand "normal/inactive" festgestellt.

Wird ausgehend von dem Zustand "normal/active" dem Prozessor über das Detektionssignal des Detektors PD mitgeteilt, daß das Netzgerät ausgefallen ist und eine Notspeisung erfolgt ("restricted polarity"), erkennt der Prozessor µC den Zustand "restricted/active". Dies bedeutet, daß im aktiven Zustand der Ausfall des Netzgeräts und die Umschaltung auf die Notspeisung noch nicht zu einer Umschaltung der Oszillatorfrequenz des Oszillators 12 führt. Anhand der Figur 3c wird unten gezeigt werden, daß die Umschaltung der Oszillatorfrequenz erst dann erfolgt, wenn der Zustand "aktiv" beendet wird, also der Übergang in den inaktiven Zustand erfolgt.

Figur 3b geht aus von dem Zustand "normal/inactive". Erfolgt über die ISDN-Leitung ein "activate request", werden die Bauelemente aus der Stand-by-Schaltung in die Normalschaltung geschaltet und der Ausgangszustand der Figur 3a "normal/active" ist wiederhergestellt.

Wird jedoch ausgehend von dem Zustand "normal/inactive" der Ausfall des Netzgeräts und die Umschaltung auf Notspeisung festgestellt ("restricted polarity"), wird der Betriebszustand "restricted/inactive" vom Prozessor µC eingestellt, indem die Frequenz des Oszillators 12 durch Umschaltung des Netzwerks Z₁ ... Zₙ auf eine hohe Frequenz umgeschaltet wird.

Figur 3c geht aus von dem Zustand "restricted/active", also den Zustand der Notspeisung bei einem als "aktiv" erkannten Endgerät. Wird der Ausfall des Netzgeräts in diesem Zustand wieder behoben, so daß die Notspeisung durch eine Normalspeisung aus dem Netzgerät ersetzt wird ("normal polarity"), wird der Zustand "normal/active" wieder erkannt.

Wenn jedoch die Notspeisung beibehalten wird und die Verbindung des aktiven Endgeräts beendet und der Hörer aufgelegt wird ("deactivate request"), werden die Bauelemente in den Stand-by-Zustand gefahren und der Oszillator 12 auf eine hohe Frequenz umgeschaltet. Diese Steuerung entspricht dem Zustand "restricted/inactive".

Figur 3d geht aus von dem Zustand "restricted/inactive", also dem Zustand der Notspeisung im inaktiven Zustand. Wird das Netzgerät wieder wirksam, erkennt der Detektor PD "normal polarity". Dieses Signal führt im Prozessor µC zur Steuerung der Umschaltung des Oszillators 12 auf eine niedrige Oszillatorfrequenz und zur Feststellung des Zustands "normal/inactive".

Bleibt jedoch die Notspeisung in Kraft und es erfolgt ein "activate request", werden die Bauelemente in den Betriebszustand versetzt und die Frequenz des Oszillators 12 auf die niedrige Frequenz umgeschaltet. Dieser Zustand entspricht dem Betriebszustand "restricted/active".

Die Schaltung der Oszillatorfrequenz des Oszillators 12 des Gleichspannungswandlers 10 erfolgt somit in Abhängigkeit von den erkannten Betriebszuständen des Endgeräts durch den Prozessor µC aufgrund der ihm über die ISDN-Leitung zugeführten Statussignale "active/inactive" und das Detektionssignal des Detektors PD.

## Patentansprüche

1. Telekommunikations-Endgerät mit einem Eingang für eine Eingangsspannung aus einem Netzgerät oder einer Telefonleitung, über die eine Notspeisung beim Ausfall des Netzgeräts erfolgt, mit einem Detektor (PD) für den Zustand der Versorgung über das Netzgerät oder über die Notspeisung, mit einem Prozessor (µC), dem das Detektionssignal des Detektors (PD) und über die Telefonleitung übertragene Kommunikationssignale einschließlich von Statussignalen zuführbar sind, und mit einem primär getakteten Schaltregler als Gleichspannungswandler (10) zur Wandlung der Eingangsspannung (VCC) in eine Versorgungsspannung (VOUT), der einen Oszillator (12) mit einem frequenzbeeinflussenden äußeren passiven Bauelement (R₁) enthält, **dadurch gekennzeichnet**, **daß** das frequenzbeeinflussende Bauelement (R1) durch zumindest ein weiteres passives Bauelement (Z₁ ... Zₙ) zu einem Netzwerk erweitert ist, das durch den Prozessor (µC) in Abhängigkeit von vom Prozessor (µC) erkannten Betriebszuständen des Endgeräts schaltbar ist.

2. Telekommunikations-Endgerät nach Anspruch 1, **dadurch ge** **kennzeichnet**, daß das erste passive Bauelement (R₁) ein Widerstand ist.

3. Telekommunikations-Endgerät nach Anspruch 2, **dadurch gekennzeichnet**, daß das zumindest eine weitere Bauelement (Z₁ ... Zₙ) ein Widerstand ist.

4. Telekommunikations-Endgerät nach einem der vorhergehenden Ansprüche, **dadurch gekennzeichnet**, daß der Schaltregler (10) ein Gegentakt-Wandler ist.

5. Telekommunikations-Endgerät nach einem der Ansprüche 1 bis 3, **dadurch gekennzeichnet**, daß der Schaltregler (10) ein Eintakt-Wandler ist.

6. Telekommunikations-Endgerät nach einem der vorhergehenden Ansprüche, **dadurch gekennzeichnet**, daß die Ansteuerschaltung einen handelsüblichen integrierten Baustein mit einem Oszillator umfaßt, mit Anschlüssen (OSZₒᵤₜ; OSZᵢₙ) für einen vom Anwender zu wählenden Widerstand (R₁) als frequenzbestimmendes Bauelement, wobei zumindest ein zusätzliches schaltbares Bauelement (Z₁ ... Zₙ) zur Veränderung der Oszillatorfrequenz vorgesehen ist.

7. Telekommunikations-Endgerät nach Anspruch 6, **dadurch gekennzeichnet**, daß der integrierte Baustein ein internes Netzwerk aufweist mit zumindest einem Widerstand (R₂) und einem Ladekondensator (C₁), wobei der Ladekondensator (C₁) den Umsteuerpunkt des Oszillators bestimmt, und daß das zumindest eine zusätzliche schaltbare Bauelement (Z₁ ... Zₙ) parallel zu dem bausteininternen Netzwerk an Masse schaltbar ist.

8. Telekommunikations-Endgerät nach einem der Ansprüche 1 bis 7, dadurch gekennzeichnet, daß die vom Prozessor (µC) erkennbaren Betriebszustände aus einer Auswertung der übertragenen Statussignale und des Detektionssignals des Detektors (PD) gebildet sind.

9. Telekommunikations-Endgerät nach einem der Ansprüche 1 bis 8, dadurch gekennzeichnet, daß die Polarität der vom Netzgerät gelieferten Spannung gegenüber der Notspeisung umgekehrt ist und daß der Detektor (PD) ein Polarisationsdetektor ist.

10. Telekommunikations-Endgerät nach Anspruch 9, dadurch gekennzeichnet, daß die Eingangsspannung dem Gleichspannungswandler (10) über eine Verpolungsschaltung (GR) zuführbar ist.
